# EUROPEAN PATENT SPECIFICATION

(11) **EP 4 269 928 B1**
(45) Date of publication and mention of the grant of the patent: **28.05.2025**
(21) Application number: 20966919.1
(22) Date of filing: 24.12.2020
(51) Int. Cl.: F28F 21/06, F24F 7/08, F28D 9/02, F28F 3/08, B01D 63/08, F24F 3/147, F24F 12/00, F28D 9/00, F28D 21/00, F28F 3/02, F28F 3/04, B01D 69/12, B01D 71/76, B01D 71/80, B01D 67/00, B23B 3/30, B32B 27/32, B32B 27/34, B32B 3/30, B32B 27/08

(54) **TOTAL HEAT EXCHANGE ELEMENT-PURPOSE FLOW CHANNEL PLATE, TOTAL HEAT EXCHANGE ELEMENT, TOTAL HEAT EXCHANGE VENTILATOR, AND TOTAL HEAT EXCHANGE ELEMENT-PURPOSE FLOW CHANNEL PLATE MANUFACTURING METHOD**
STRÖMUNGSKANALPLATTE FÜR GESAMTWÄRMETAUSCHERELEMENT, GESAMTWÄRMETAUSCHERELEMENT, GESAMTWÄRMETAUSCHERVENTILATOR UND VERFAHREN ZUR HERSTELLUNG EINER GESAMTWÄRMETAUSCHERELEMENT-STRÖMUNGSKANALPLATTE
PLAQUE DE CIRCUIT D'ÉCOULEMENT POUR ÉLÉMENT D'ÉCHANGE DE CHALEUR TOTALE, ÉLÉMENT D'ÉCHANGE DE CHALEUR TOTALE, DISPOSITIF DE VENTILATION À ÉCHANGE DE CHALEUR TOTALE ET PROCÉDÉ DE FABRICATION DE PLAQUE DE CIRCUIT D'ÉCOULEMENT POUR ÉLÉMENT D'ÉCHANGE DE CHALEUR TOTALE

(43) Date of publication of application: 01.11.2023
(73) Proprietor: MITSUBISHI ELECTRIC CORPORATION, Chiyoda-ku Tokyo 100-8310 (JP)
(72) Inventor: SOTOKAWA, Hajime, Tokyo 100-8310 (JP); FUJITA, Masashi, Tokyo 100-8310 (JP); MATSUO, Yuichi, Tokyo 100-8310 (JP); IZUTANI, Tasuku, Tokyo 100-8310 (JP)
(74) Representative: Mewburn Ellis LLP
(86) International application number: PCT/JP2020/048449
(87) International publication number: WO 2022/137430

(56) References cited:
- EP-A2- 0 661 502
- WO-A1-2013/099607
- JP-A- 2005 282 904
- JP-A- 2012 117 078
- JP-A- 2014 028 915
- JP-A- 2017 025 244
- JP-A- 2019 528 419
- JP-A- 2020 506 275
- JP-B2- 5 506 441
- JP-B2- H0 425 476
- US-A1- 2018 161 735
- KOESTER SEBASTIAN MARKUS ET AL: "Membrane-based Enthalpy Exchangers Von der Fakultät für Maschinenwesen der Rheinisch-Westfälischen Technischen Hochschule Aachen zur Erlangung des akademischen Grades eines Doktors der Ingenieurwissenschaften genehmigte Dissertation vorgelegt von", 4 July 2016 (2016-07-04), pages 1 - 112, XP093110641, Retrieved from the Internet <URL:https://publications.rwth-aachen.de/record/688743/files/688743.pdf> [retrieved on 20231211]
- ENGARNEVIS AMIN ET AL: "Impact of humidity, temperature, and particulate fouling on membrane-based energy exchangers", 1 January 2018 (2018-01-01), pages 1 - 221, XP093110649, Retrieved from the Internet <URL:https://open.library.ubc.ca/media/stream/pdf/24/1.0371165/4> [retrieved on 20231211]
- GARLE AMIT L. ET AL: "Improving the antifouling properties of polypropylene surfaces by melt blending with polyethylene glycol diblock copolymers", JOURNAL OF APPLIED POLYMER SCIENCE, vol. 135, no. 15, 22 December 2017 (2017-12-22), US, XP093110633, ISSN: 0021-8995, Retrieved from the Internet <URL:https://onlinelibrary.wiley.com/doi/full-xml/10.1002/app.46122> [retrieved on 20231211], DOI: 10.1002/app.46122

## Description

### Field

The present disclosure relates: to a flow channel plate for a total heat exchange element (hereinafter referred to as total heat exchange element-purpose flow channel plate), a total heat exchange element and a total heat exchange ventilator each for exchanging sensible heat and latent heat between two airflows having different temperatures and different humidity levels; and to a total heat exchange element-purpose flow channel plate manufacturing method.

### Background

One ventilation method with reduced loss of indoor heating-cooling efficiency is to ventilate a room with heat exchange between supply airflow and exhaust airflow. To increase heat exchange efficiency in this process, a method using a total heat exchange element is effective. A total heat exchange element provides total heat exchange, in which sensible heat representing temperature and latent heat representing humidity are exchanged at a same time between supply airflow and exhaust airflow. Patent Literature 1 discloses a total heat exchange element that provides such total heat exchange, configured such that flat plate-shaped partitioning members and corrugated flow channel plates are alternately stacked one on top of another. In addition, in the total heat exchange element described in Patent Literature 1, the partitioning members are each configured such that a first membrane has both surfaces thereof being sandwiched between second membranes, where the first membrane is a water-insoluble membrane having a gas blocking property and water vapor permeability, and contains a deliquescent salt added thereto as a hydrophilic material, and the second membranes are porous and formed of polypropylene, having water impermeability and water vapor permeability. In a total heat exchange element having such configuration, a supply airflow channel and an exhaust airflow channel are formed as flow channels independent of each other with the partitioning member interposed therebetween. This total heat exchange element allows total heat exchange to be provided between a supply airflow flowing through the supply airflow channel and an exhaust airflow flowing through the exhaust airflow channel, thereby enabling ventilation to be provided while reducing changes in the temperature and in the humidity of the room.

Recently, with a wide spread of total heat exchange ventilators that use a total heat exchange element, total heat exchange ventilators have been installed in diverse environments including cold regions, bathrooms, and dry regions. To address such situation, countercurrent flow-type total heat exchange elements are increasingly used that include a countercurrent flow portion where a supply airflow and an exhaust airflow flow in opposite directions in a heat exchange portion. This aims at a further increase, in any environment, in total heat exchange efficiency, which indicates a function of the total heat exchange ventilator of exchanging latent heat and sensible heat. A countercurrent flow-type total heat exchange element is formed by stacking, one on top of another, formed products each having ribs on a heat transfer plate to separate flow channels.

US 2018/161735 A1 discloses a heat exchanger plate using block copolymers based on PEG as a moisture permeable material, such as PEBAX, PERMAX or PEO-PBT, coated on a PP substrate. Koester Sebastian Markus ET AL: Dissertation entitled "Membrane-based Enthalpy Exchangers", Fakultät für Maschinenwesen der Rheinisch-Westfälischen Technischen Hochschule Aachen, 4 July 2016 (2016-07-04), pages 1-112 discloses heat exchanger plates using block copolymers based on PEG as a moisture permeable material, such as PEBAX or PEO-PBT, coated on a PE substrate.

### Citation List

### Patent Literature

Patent Literature 1: Japanese Patent No. 5506441 Summary

### Technical Problem

However, when the configuration of the total heat exchange element described in Patent Literature 1 is applied to a countercurrent flow-type total heat exchange element, contact of dew condensation water with a surface of the partitioning member forming the flow channel may cause the deliquescent salt added as a hydrophilic material to dissolve into the dew condensation water on the surface, and thus to flow away. This presents a problem in a decrease in performance of the total heat exchange element in case of dew condensation.

The present disclosure has been made in view of the foregoing, and it is an object of the present disclosure to provide a total heat exchange element-purpose flow channel plate capable of suppressing a decrease in performance in case of dew condensation as compared to a decrease in conventional ones.

### Solution to Problem

To solve the above problems and achieve the object, a total heat exchange element-purpose flow channel plate according to the present disclosure is set forth in claim 1.

### Advantageous Effects of Invention

A total heat exchange element-purpose flow channel plate according to the present disclosure is advantageous in capability of suppressing a decrease in performance in case of dew condensation as compared to a decrease in conventional ones.

### Brief Description of Drawings

FIG. 1 is a perspective view illustrating an example of schematic configuration of a total heat exchange element according to a first embodiment.
FIG. 2 is a top view schematically illustrating an example of configuration of a first flow channel plate included in the total heat exchange element according to the first embodiment.
FIG. 3 is a cross-sectional view illustrating an example of configuration of a countercurrent flow portion of the first flow channel plate of the total heat exchange element according to the first embodiment, and is a cross-sectional view taken along line III-III of FIG. 2.
FIG. 4 is a top view schematically illustrating an example of configuration of a second flow channel plate included in the total heat exchange element according to the first embodiment.
FIG. 5 is a cross-sectional view illustrating an example of configuration of a countercurrent flow portion of the second flow channel plate of the total heat exchange element according to the first embodiment, and is a cross-sectional view taken along line V-V of FIG. 4.
FIG. 6 is a cross-sectional view illustrating an example of configuration of the countercurrent flow portions when the first flow channel plate and the second flow channel plate according to the first embodiment are stacked one on top of another.
FIG. 7 is a diagram illustrating an example of schematic configuration of a total heat exchange ventilator incorporating the total heat exchange element according to the first embodiment.

### Description of Embodiment

A total heat exchange element-purpose flow channel plate, a total heat exchange element, a total heat exchange ventilator, and a total heat exchange element-purpose flow channel plate manufacturing method according to an embodiment of the present disclosure will be described in detail below with reference to the drawings.

### First Embodiment.

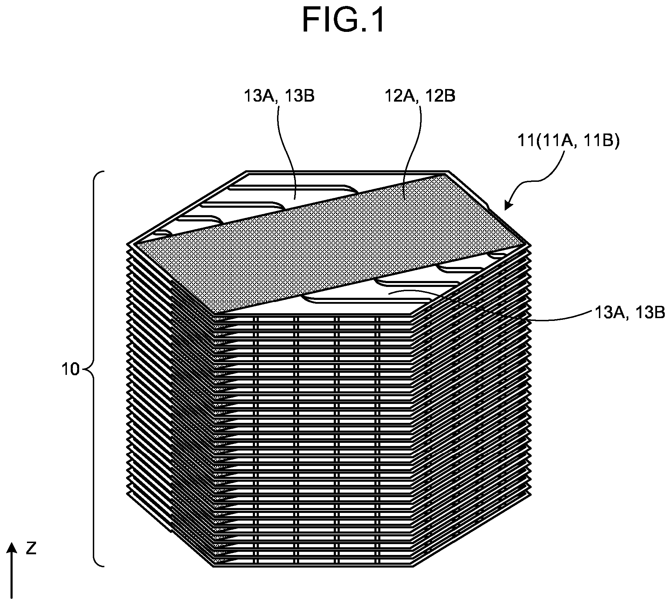

FIG. 1 is a perspective view illustrating an example of schematic configuration of a total heat exchange element according to a first embodiment. A total heat exchange element 10 is an element that exchanges heat between two fluids, during which the two fluids are separated from each other. To this end, the total heat exchange element 10 includes two types of flow channel plates, which are first flow channel plates 11A and second flow channel plates 11B, each of which is a flow channel plate for a total heat exchange element (hereinafter referred to as total heat exchange element-purpose flow channel plate). The total heat exchange element 10 is formed by stacking one on top of another, and joining together, the first flow channel plates 11A and the second flow channel plates 11B. The first flow channel plates 11A each include a countercurrent flow portion 12A for providing high heat exchange efficiency, and header portions 13A for causing the two fluids to flow separately. Similarly, the second flow channel plates 11B each include a countercurrent flow portion 12B and header portions 13B. Note that in FIG. 1, the Z-axis is parallel to the direction in which the first flow channel plates 11A and the second flow channel plates 11B are stacked. The positive direction side and the negative direction side of each of the first flow channel plates 11A and the second flow channel plates 11B along the Z-axis are referred to respectively as the front side and the rear side. In addition, when no distinction is made, the first flow channel plates 11A and the second flow channel plates 11B are hereinafter each referred to simply as the flow channel plate 11.

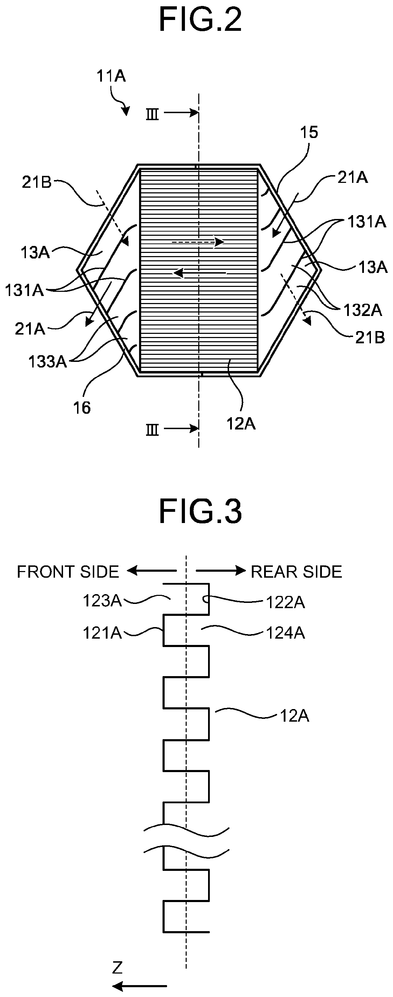

FIG. 2 is a top view schematically illustrating an example of configuration of each of the first flow channel plates included in the total heat exchange element according to the first embodiment. Each of the first flow channel plates 11A (hereinafter referred to simply as the first flow channel plate 11A) has a hexagonal shape as viewed in the Z-direction. The first flow channel plate 11A includes two header portions 13A and the countercurrent flow portion 12A disposed between the two header portions 13A. The countercurrent flow portion 12A has a rectangular shape. The header portions 13A have an isosceles triangular shape, and are arranged to have the bases of the header portions 13A of the isosceles triangular shapes being contacted with a pair of parallel sides of the countercurrent flow portion 12A having a rectangular shape.

The header portions 13A are flat in shape. One header portion 13A of the two header portions 13A has a first inlet port 15 for allowing air to flow in therethrough on the front side of one of the equal legs. To form flow channels 132A to guide air, from the first inlet port 15 to the countercurrent flow portion 12A, ribs 131A are provided which are distance maintaining members. On the front side of the other one of the equal legs, another rib 131A is provided, by way of example, along that equal leg to prevent air from entering. In addition, the other one of the header portions 13A has a first outlet port 16 for allowing air to flow out therethrough on the front side of one of the equal legs. To form flow channels 133A to guide air, from the countercurrent flow portion 12A to the first outlet port 16, ribs 131A are provided. On the front side of the other one of the equal legs, another rib 131A is provided, by way of example, along that equal leg to prevent air from entering or exiting. The first inlet port 15 and the first outlet port 16 are disposed on a pair of parallel sides in the first flow channel plate 11A having a hexagonal shape.

The countercurrent flow portion 12A has a plurality of flow channels that connect the flow channels 132A and the flow channels 133A. FIG. 3 is a cross-sectional view illustrating an example of configuration of the countercurrent flow portion of the first flow channel plate of the total heat exchange element according to the first embodiment, and is a cross-sectional view taken along line III-III of FIG. 2. Note that the dotted line in FIG. 3 represents the position of the plate surfaces of the header portions 13A. The countercurrent flow portion 12A has a corrugated form formed by protruding portions 121A and recessed portions 122A, designated as such as viewed from the front side, each extending in one direction (in the example of FIG. 3, the direction perpendicular to the paper), arranged in parallel alternately and consecutively. A single one of the recessed portions 122A forms a single one of flow channels 123A on the front side, and a single one of the protruding portions 121A forms a single one of flow channels 124A on the rear side. As illustrated in FIG. 3, each of the protruding portions 121A (hereinafter, simply the protruding portion 121A) has planar side surfaces and a planar upper surface, and each of the recessed portions 122A (hereinafter, simply the recessed portion 122A) has planar side surfaces and a planar lower surface. In addition, the cross section of each of the protruding portion 121A and the recessed portion 122A perpendicular to the extension direction is rectangular in shape. For each of the flow channels 123A and 124A, the size along the direction perpendicular to both the extension direction of the flow channels 123A and 124A and the z-direction is herein referred to as width. In addition, the difference between the position of the protruding portion 121A and the position of the recessed portion 122A along the z-direction is herein referred to as depth. The ratio of the depth to the width of each of the flow channels 123A and 124A is the aspect ratio.

The countercurrent flow portion 12A and the header portions 13A are formed integrally and continuously with each other. The header portions 13A have a flat plate shape, and the countercurrent flow portion 12A has a corrugated form. The header portions 13A and the countercurrent flow portion 12A greatly change the shapes thereof at the interface therebetween.

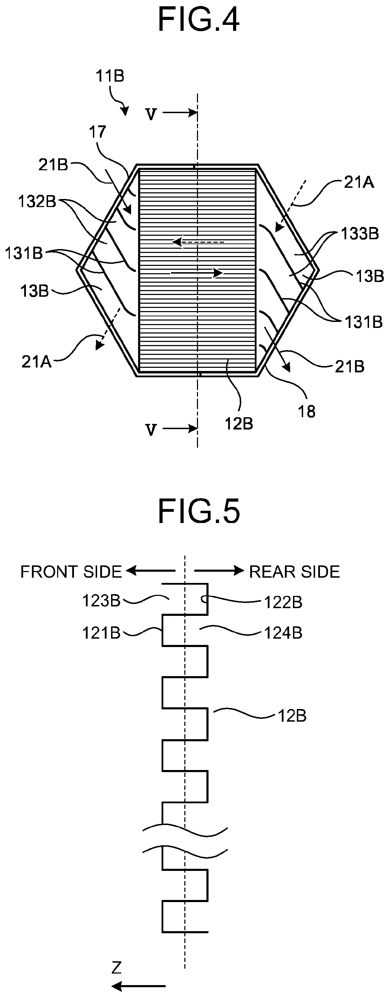

FIG. 4 is a top view schematically illustrating an example of configuration of each of the second flow channel plates included in the total heat exchange element according to the first embodiment. Each of the second flow channel plates 11B (hereinafter referred to simply as the second flow channel plate 11B) has a hexagonal shape as viewed in the Z-direction. The second flow channel plate 11B includes two header portions 13B and the countercurrent flow portion 12B disposed between the two header portions 13B. The countercurrent flow portion 12B has a rectangular shape. The header portions 13B have an isosceles triangular shape, and are arranged to have the bases of the header portions 13B of the isosceles triangular shapes being contacted with a pair of parallel sides of the countercurrent flow portion 12B having a rectangular shape.

The header portions 13B are flat in shape. One header portion 13B of the two header portions 13B has a second inlet port 17 for allowing air to flow in therethrough on the front side of one of the equal legs. To form flow channels 132B to guide air, from the second inlet port 17 to the countercurrent flow portion 12B, ribs 131B are provided which are distance maintaining members. On the front side of the other one of the equal legs, another rib 131B is provided, by way of example, along that equal leg to prevent air from entering. In addition, the other one of the header portions 13B has a second outlet port 18 for allowing air to flow out therethrough on the front side of one of the equal legs. To form flow channels 133B to guide air, from the countercurrent flow portion 12B to the second outlet port 18, ribs 131B are provided. On the front side of the other one of the equal legs, another rib 131B is provided, by way of example, along that equal leg to prevent air from entering or exiting. The second inlet port 17 and the second outlet port 18 are disposed on a pair of parallel sides in the second flow channel plate 11B having a hexagonal shape. Note that the second flow channel plate 11B and the first flow channel plate 11A are stacked one on top of another in a configuration in which the second inlet port 17 and the second outlet port 18 are positioned on a pair of opposing sides different from the sides where the first inlet port 15 and the first outlet port 16 of the first flow channel plate 11A are positioned.

The countercurrent flow portion 12B has a plurality of flow channels that connect the flow channels 132B and the flow channels 133B. FIG. 5 is a cross-sectional view illustrating an example of configuration of the countercurrent flow portion of the second flow channel plate of the total heat exchange element according to the first embodiment, and is a cross-sectional view taken along line V-V of FIG. 4. Note that the dotted line in FIG. 5 represents the position of the plate surfaces of the header portions 13B. The countercurrent flow portion 12B has a corrugated form formed by protruding portions 121B and recessed portions 122B, designated as such as viewed from the front side, each extending in one direction (in the example of FIG. 5, the direction perpendicular to the paper), arranged in parallel alternately and consecutively. A single one of the recessed portions 122B forms a single one of flow channels 123B on the front side, and a single one of the protruding portions 121B forms a single one of flow channels 124B on the rear side. As illustrated in FIG. 5, each of the protruding portions 121B (hereinafter, simply the protruding portion 121B) has planar side surfaces and a planar upper surface, and each of the recessed portions 122B (hereinafter, simply the recessed portion 122B) has planar side surfaces and a planar lower surface. In addition, the cross section of each of the protruding portion 121B and the recessed portion 122B perpendicular to the extension direction is rectangular in shape.

The countercurrent flow portion 12B and the header portions 13B are formed integrally and continuously with each other. The header portions 13B have a flat plate shape, and the countercurrent flow portion 12B has a corrugated form. The header portions 13B and the countercurrent flow portion 12B greatly change the shapes thereof at the interface therebetween.

As described above, the first flow channel plate 11A and the second flow channel plate 11B are mirror symmetric with each other when viewed in the z-direction.

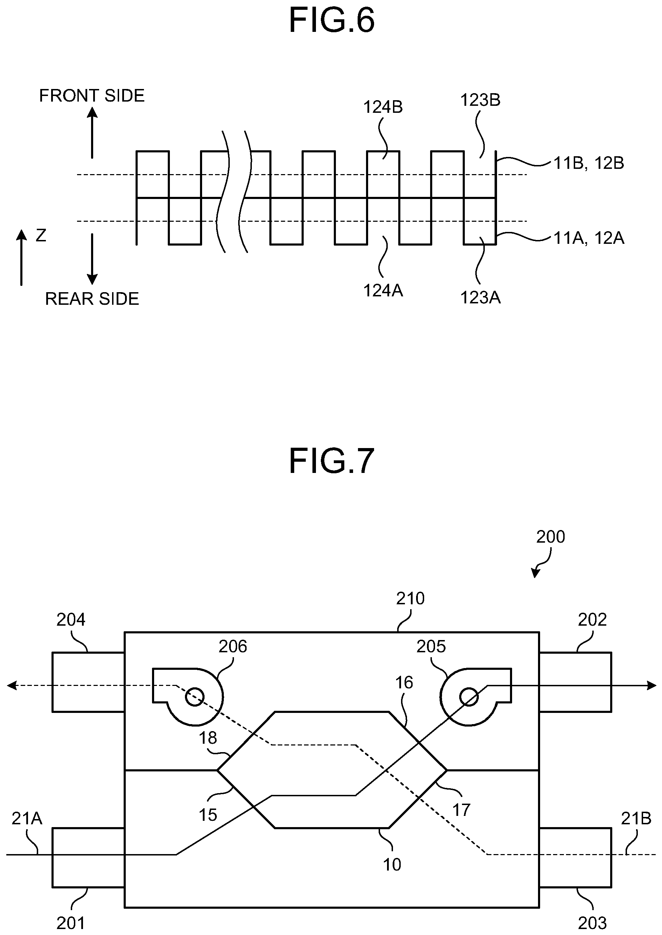

FIG. 6 is a cross-sectional view illustrating an example of configuration of the countercurrent flow portions when the first flow channel plate and the second flow channel plate according to the first embodiment are stacked one on top of another. Note that FIG. 6 illustrates a case in which one of the second flow channel plates 11B is stacked on one of the first flow channel plates 11A. In addition, the dotted line in FIG. 6 on the first flow channel plate 11A represents the position of the plate surfaces of the header portions 13A, and the dotted line in FIG. 6 on the second flow channel plate 11B represents the position of the plate surfaces of the header portions 13B. The first flow channel plate 11A and the second flow channel plate 11B are joined together to form a single plane at the position of the front side surface of the flow channel 124A of the first flow channel plate 11A and at the position of the rear side surface of the flow channel 123B of the second flow channel plate 11B. The first flow channel plate 11A and the second flow channel plate 11B are thus stacked one on top of another along the z-direction. In this respect, the first flow channel plate 11A and the second flow channel plate 11B are joined together to arrange that the opening of the flow channel 123A formed by the recessed portion 122A of the first flow channel plate 11A is closed by the bottom of the flow channel 123B formed by the recessed portion 122B of the second flow channel plate 11B, and that the opening of the flow channel 124B formed by the protruding portion 121B of the second flow channel plate 11B is closed by the bottom of the flow channel 124A formed by the protruding portion 121A of the first flow channel plate 11A. Note that the flow channel 123A corresponds to a first flow channel; the flow channel 123B corresponds to a second flow channel; the flow channel 124B corresponds to a third flow channel; and the flow channel 124A corresponds to a fourth flow channel.

When the first flow channel plate 11A and the second flow channel plate 11B have been stacked one on top of another, a first fluid 21A flowed in through the first inlet port 15 of the first flow channel plate 11A flows: through the flow channels 132A of the corresponding one of the header portions 13A formed on the front side of the first flow channel plate 11A; through the flow channels 123A of the countercurrent flow portion 12A, and through the flow channels 133A of the corresponding one of the header portions 13A; and flows out through the first outlet port 16. In addition, a second fluid 21B flowed in through the second inlet port 17 formed by the corresponding one of the header portions 13B of the second flow channel plate 11B disposed on the rear side of the first flow channel plate 11A flows through the flow channels 124A of the countercurrent flow portion 12A formed on the rear side of the first flow channel plate 11A, and flows out through the second outlet port 18 formed by the corresponding one of the header portions 13B of the second flow channel plate 11B disposed on the rear side. Similarly, the second fluid 21B flowed in through the second inlet port 17 of the second flow channel plate 11B flows through the flow channels 132B of the corresponding one of the header portions 13B formed on the front side of the second flow channel plate 11B, through the flow channels 123B of the countercurrent flow portion 12B, and through the flow channels 133B of the corresponding one of the header portions 13B, and flows out through the second outlet port 18. In addition, the first fluid 21A flowed in through the first inlet port 15 formed by the corresponding one of the header portions 13A of the first flow channel plate 11A disposed on the rear side of the second flow channel plate 11B flows through the flow channels 124B of the countercurrent flow portion 12B formed on the rear side of the second flow channel plate 11B, and flows out through the first outlet port 16 formed by the corresponding one of the header portions 13A of the first flow channel plate 11A disposed on the rear side. In this process, the flow channels 123B and 124A, through which the second fluid 21B flows, are disposed near the flow channels 123A and 124B, through which the first fluid 21A flows; and the flow channels 123A and 124B, through which the first fluid 21A flows, are disposed near the flow channels 123B and 124A, through which the second fluid 21B flows. This causes sensible heat and latent heat to be exchanged between the first fluid 21A flowing through the flow channel 123A and through the flow channel 124B, and the second fluid 21B flowing through the flow channel 123B and through the flow channel 124A.

As described above, total heat exchange can be provided between the first fluid 21A and the second fluid 21B via the first flow channel plates 11A and the second flow channel plates 11B without causing mixture of the first fluid 21A and the second fluid 21B in the total heat exchange element 10 including the plurality of first flow channel plates 11A and the plurality of second flow channel plates 11B that are alternately stacked one on top of another.

The flow channel plate 11 will next be described in more detail. The flow channel plate 11 combines water vapor permeability, which is a property to allow water vapor to pass through, and a gas barrier property, which is a ventilation property provided by separation of the first fluid 21A and the second fluid 21B. In addition, by using a higher aspect ratio than aspect ratios in conventional ones in the flow channels 123A, 123B, 124A, and 124B of the countercurrent flow portions 12A and 12B, the first fluid 21A and the second fluid 21B flowing through ones of the flow channels 123A, 123B, 124A, and 124B are in contact in larger areas with the first fluid 21A and the second fluid 21B flowing through other ones of the flow channels 123A, 123B, 124A, and 124B that are adjacent in the widthwise direction, with the flow channel plate 11 interposed therebetween. This enables the total heat exchange element 10 to exhibit high total heat exchange efficiency. Specifically, the flow channel plate 11 is formed from a material containing, as a base material, a resin layer film having water impermeability, which is a property to disallow passing of liquid water, and a gas barrier property, which is a property to disallow passing of air, but having water vapor permeability, which is a property to allow water vapor to pass through. The resin layer film is required merely to have such properties, and is not limited to a film of a specific material. The base material that is a resin layer film is a hydrophobic film from a viewpoint of water impermeability and gas barrier property. The base material that is a resin layer film is a polypropylene with addition of a low-density polyethylene having a branched structure. In other aspects not falling under the scope of the claims, the base material can be a polypropylene having a long chain branched hydrocarbon structure, produced by polymerization using a metallocene catalyst.

The term long chain branched hydrocarbon structure refers to a branched structure having a main chain having several tens or more of carbon atoms, and formed of a molecular chain having a molecular weight of several hundred or more. A long chain branched hydrocarbon structure is thus distinguished from a short chain branched structure having several carbon atoms, produced by copolymerization with α-olefin, such as the structure of 1-butene. Physical tangling and unlikeliness of untangling in the long chain branched hydrocarbon structure has an effect of increasing melt strength. This is thought to provide excellent stretchability and rigidity at a high temperature.

The polypropylene having a long chain branched hydrocarbon structure, produced by polymerization using a metallocene catalyst may be any polypropylene having a long chain branched hydrocarbon structure, produced by polymerization using a metallocene catalyst. Examples of major commercially available products thereof include products having trade names of Waymax (registered trademark) MFX8, Waymax MFX6, Waymax MFX3, Waymax EX8000, Waymax EX6000, and Waymax EX4000 manufactured by Japan Polypropylene Corporation.

The low-density polyethylene having a branched structure may be any standard low-density polyethylene. Examples of major commercially available products thereof include a product having a trade name of Novatec (registered trademark) LD ZE41K manufactured by Japan Polyethylene Corporation, products having trade names of Suntec (registered trademark)-LD M2004 and Suntec-LD M1703 manufactured by Asahi Kasei Corporation, and products having trade names of Sumikathene (registered trademark) F101-1 and Sumikathene G-109 manufactured by Sumitomo Chemical Co., Ltd.

In addition, to increase the water vapor permeability of the flow channel plate 11, a block copolymer based on a polyethylene glycol as a raw material is mixed, as a moisture permeable material, in the base material that is a resin layer film described above. The copolymer based on a polyethylene glycol is preferably a polyether block amide copolymer (PEBA), a polyethylene glycol-polyamide block copolymer, a polyethylene glycol-polyester block copolymer, a polyethylene glycol-polyurethane block copolymer, or the like. Still more preferably, a polyethylene glycol-polyamide block copolymer can be used from a viewpoint of heat resistance. In addition, the moisture permeable material may be a combination of two or more copolymers selected from a group of these resins.

Moreover, to increase compatibility between the base material that is a resin layer film of the flow channel plate 11 and the copolymer based on a polyethylene glycol as a raw material for increase in the water vapor permeability, any compatibilizing agent may be used. Examples of the compatibilizing agent include graft copolymers each having a main chain having a structure of a polyolefin-based polymer, and a side chain having a structure of a vinyl-based polymer being bonded to the main chain; polyolefins modified by an acid such as carboxylic anhydride or maleic anhydride; and sterically hindered amine ether-based compounds. Among these, a single agent may be used alone, or two or more thereof may be used in combination. Among these compatibilizing agents, graft copolymers and sterically hindered amine ether-based compounds are preferred, and graft copolymers are more preferred.

Examples of the polyolefin-based polymer that forms the backbone of the main chain in the graft copolymer include polyethylenes, polypropylenes, ethylene-vinyl acetate copolymers, ethylene-ethyl acrylate copolymers, and ethylene-glycidyl methacrylate copolymers. Examples of the vinyl-based polymer that forms the backbone of the side chain in the graft copolymer include polystyrenes, styreneacrylonitrile copolymers, butyl acrylate-methyl methacrylate copolymers, and methyl methacrylate-methacrylic acid copolymers.

A polyolefin modified by an acid such as carboxylic anhydride or maleic anhydride is preferable as the compatibilizing agent, and a polypropylene resin containing maleic anhydride is more preferable. Use of these compatibilizing agents can increase compatibility between the base material that is a resin layer film and the block copolymer based on a polyethylene glycol as a raw material. The polypropylene resin containing maleic anhydride is hereinafter referred to as MA-g-PP.

A method of manufacturing the total heat exchange element 10 according to the first embodiment will next be described. First, a resin composition production step is performed. In the resin composition production step, a resin composition is produced by mixing together a base material and a moisture permeable material, where the base material is a polypropylene with addition of a low-density polyethylene having a branched structure, and the moisture permeable material is a block copolymer based on a polyethylene glycol as a raw material.

In the resin composition production step, the above-mentioned compatibilizing agent may be further mixed to increase compatibility between the base material and the moisture permeable material.

In the resin composition production step, there is no particular limitation on the method of mixing together the base material and the moisture permeable material, or on the method of mixing together the base material, the moisture permeable material, and the compatibilizing agent. Examples of the method include dry blending of the resins in powder form or in pellet form using a mixer or the like, and a method in which the resins in powder form or in pellet form are blended by melt-kneading in a kneader to obtain a blended resin composition.

In the case of dry blending, there is no particular limitation on the usable mixer. A Henschel mixer, a ribbon blender, a Banbury mixer, and the like can be used. Also in the case of blending by melt-kneading, there is no particular limitation on the usable kneader, and any of kneaders of a single-screw type, of a twin-screw type, and of a multi-screw type having more than two screws can be used. In cases of a kneader having two or more screws, any kneading type of unidirectional rotation and bidirectional rotation can be used.

In the case of blending by melt-kneading, there is no particular limitation on the kneading temperature as long as a good kneading result is obtainable. However, the kneading temperature is generally in a range from 160°C to 300°C, and is preferably in a range from 230°C to 270°C. A very high temperature, e.g., a temperature higher than 300°C, is not preferable for kneading due to possibility of degradation of resins. Conversely, a very low temperature, e.g., a temperature lower than 160°C, is not preferable because hard pellets that have not been softened may damage a part of the kneader. To reduce degradation during kneading-mixing of the resins, inert gas such as nitrogen may be injected into the kneader. By pelletization of melt-kneaded resins into pellets having an appropriate size using a known granulator, resin pellets can be produced.

In the resin composition production step, the base material and the moisture permeable material are mixed together to cause the base material to have a content ranging from 10 percent by weight (wt%) to 85 wt%, preferably ranging from 20 wt% to 70 wt%, relative to the total weight of the base material and the moisture permeable material.

The low-density polyethylene having a branched structure has a content greater than 0 wt% and less than or equal to 40 wt%, and more preferably greater than 0 wt% and less than or equal to 30 wt%, relative to the weight of the polypropylene with addition of a low-density polyethylene having a branched structure.

When an MA-g-PP is added as the compatibilizing agent, the MA-g-PP has a content preferably greater than 0 wt% and less than or equal to 20 wt%, more preferably greater than 0 wt% and less than or equal to 10 wt%, and still more preferably greater than 0 wt% and less than or equal to 5 wt%, relative to the resin composition.

Next, a molding step is performed. In the molding step, the mixed resin composition is molded into a sheet-like shape to form a sheet. The sheet is preferably formed from a resin composition that has been produced by mixing using a known method. For example, at least one of a resin pellet set and a resin powder is fed to an extruder, and is then heated to melt. The melt is filtered, and the resulting resin is heated to melt at a temperature ranging from 160°C to 320°C, preferably ranging from 200°C to 300°C. Note that, in addition to the at least one of a resin pellet set and a resin powder, an additive or the like in solid state may also be fed to the extruder. Then, the heated and melted resin is extruded in a molten state to one or more metal drums through a T-shaped die of the extruder, and is then cooled to solidify. A sheet is thus formed. The metal drums are maintained in a temperature range generally ranging from 80°C to 140°C, preferably ranging from 90°C to 120°C, and more preferably ranging from 90°C to 105°C. The sheet has a thickness preferably ranging from 0.05 mm to 2 mm, and more preferably ranging from 0.1 mm to 1 mm.

Then, a shaping step is performed. In the shaping step, the sheet is shaped into a corrugated form. When the sheet is shaped into a form as used in the flow channel plate 11 described above, the shaping step can be performed using a process that is one of hot press forming, pleat forming, and vacuum forming, as a hot forming process. Among these, the sheet is desirably hot-formed using vacuum forming. In this process, processing is performed on the sheet that has been formed from a resin composition having heat conductivity and moisture permeability, containing one or more base materials, and the moisture permeable material described above, where the base material is a polypropylene with addition of a low-density polyethylene having a branched structure, and the moisture permeable material is a block copolymer based on a polyethylene glycol as a raw material. Accordingly, the sheet has no porous portion. This prevents breakage even when the sheet is shaped into a corrugated form, thereby allowing a structure to be formed in a higher aspect ratio than conventional ones. In addition, the base material has higher stretchability and higher rigidity than conventional ones, thereby preventing breakage when the sheet is shaped into the structure of the flow channel plate 11 in the hot forming process.

In the case of shaping using vacuum forming, there is no particular limitation on the vacuum forming method as long as a satisfactory molded product is obtainable. However, the process is generally performed at a temperature ranging from 80°C to 180°C, and preferably at a temperature ranging from 90°C to 160°C. A very high temperature, e.g., a temperature higher than 180°C, is not preferable for vacuum forming due to possibility of degradation of resins. Conversely, vacuum forming at a very low temperature, e.g., a temperature lower than 80°C, will result in insufficient softening of the resins, which may prevent shaping into a desired shape.

Note that one or more additives may be added to the flow channel plate 11, such as an agent to impart water resistance, a flame retardant, a heat stabilizer, an antioxidant, an ultraviolet protectant, a plasticizer, a crystal nucleating agent, a foaming agent, an antimicrobial agent, a fungicide, a filler, a reinforcing agent, an electrically conductive filler, an antistatic agent, a slip additive, an antifogging agent, and/or a peroxide as long as the moisture permeability and the gas blocking property are not reduced. These agents can be used alone or in combination of two or more thereof. In addition, the contents thereof can be changed as appropriate depending on the agents.

After the countercurrent flow-type flow channel plate 11 is formed to an approximate degree, a trimming step is performed. In the trimming step, the profile of the flow channel plate 11 is completed. In addition, the ribs 131A and 131B are arranged on the header portions 13A and 13B in this step as illustrated in FIGS. 2 and 4. In this step, the first flow channel plate 11A and the second flow channel plate 11B are formed to cause the flow channels 132A and 133A of the header portions 13A and the flow channels 132B and 133B of the header portions 13B to be aligned in different directions from each other. The set of steps from the resin composition production step to the trimming step described above corresponds to a method of manufacturing the flow channel plate 11.

Thereafter, a stacking step is performed. In the stacking step, the flow channel plates 11 produced using the production procedure described above are stacked one on top of another. In this process, stacking is performed to arrange the first flow channel plates 11A and the second flow channel plates 11B to be alternately disposed in the stacking direction. The stacking step includes a joining step to perform joining for preventing mixing of the two fluids through an outer circumferential portion of the flow channel plate 11. The joining step desirably includes an adhesion step that uses an adhesive, or a welding step that uses heat or ultrasound. Alternate joining of the first flow channel plates 11A and the second flow channel plates 11B produces the total heat exchange element 10. In this process, filling, with a sealing agent, the gap between a frame formed of a resin such as acrylonitrile-butadienestyrene (ABS) or a polypropylene, and the total heat exchange element 10 can prevent mixing of the two fluids through the gap. Thus, the total heat exchange element 10 illustrated in FIG. 1 is obtained.

As described above, the total heat exchange element 10 according to the first embodiment is formed from a resin composition having heat conductivity and moisture permeability, containing one or more base materials and a moisture permeable material, where the base material is a polypropylene with addition of a low-density polyethylene having a branched structure, and the moisture permeable material is a block copolymer based on a polyethylene glycol as a raw material. This enables the flow channels 123A, 123B, 124A, and 124B having a high-aspect ratio corrugated form to be formed without causing breakage of a material that forms the resin composition during shaping of the sheet formed from the resin composition.

In addition, a total heat exchange element is conventionally known that includes a partitioning member having a multi-layer structure including a hydrophobic porous film containing a polypropylene as the base material and a water-insoluble film including a deliquescent salt as a hydrophilic material; and a corrugated flow channel plate. Such total heat exchange element may encounter a situation in which when dew condensation water on a surface of the partitioning member forming a flow channel remains on the surface, the deliquescent salt added as a hydrophilic material is dissolved into the dew condensation water on the surface, and thus flows away. In contrast, the total heat exchange element 10 according to the first embodiment uses no deliquescent salt as a hydrophilic material. Accordingly, the situation does not occur in which the deliquescent salt is dissolved into the dew condensation water and flows away even in an environment in which dew condensation repeatedly occurs, or in an environment of very high humidity but not as high enough to cause dew condensation. Thus, decrease in performance of the total heat exchange element 10 can be suppressed as compared to conventional ones.

A total heat exchange ventilator incorporating the total heat exchange element 10 according to the first embodiment will next be described. FIG. 7 is a diagram illustrating an example of schematic configuration of a total heat exchange ventilator incorporating the total heat exchange element according to the first embodiment. A total heat exchange ventilator 200 incorporating the total heat exchange element 10 according to the first embodiment will be described below as an example.

As illustrated in FIG. 7, the total heat exchange ventilator 200 includes an outdoor air duct 201, a supply air duct 202, a return air duct 203, an exhaust air duct 204, an air supply blower 205, an exhaust blower 206, the total heat exchange element 10, and a casing 210. Note that FIG. 7 schematically illustrates the inside of the casing 210 as viewed from above.

The casing 210 is a box-like member that houses the air supply blower 205, the exhaust blower 206, and the total heat exchange element 10. The supply air duct 202 and the return air duct 203 are provided on the indoor side face of the casing 210. The outdoor air duct 201 and the exhaust air duct 204 are provided on the outdoor side face of the casing 210. The outdoor air duct 201 is connected to the first inlet port 15 of the total heat exchange element 10, and the supply air duct 202 is connected to the first outlet port 16 of the total heat exchange element 10. In the casing 210, an air supply channel is formed from the outdoor air duct 201 through the total heat exchange element 10 to the supply air duct 202. The return air duct 203 is connected to the second inlet port 17 of the total heat exchange element 10, and the exhaust air duct 204 is connected to the second outlet port 18 of the total heat exchange element 10. In the casing 210, an exhaust channel is formed from the return air duct 203 through the total heat exchange element 10 to the exhaust air duct 204.

The air supply blower 205 is disposed in the air supply channel. The air supply blower 205 corresponds to a first blower. The air supply blower 205 functions to take outdoor air through the outdoor air duct 201 into the air supply channel to generate the first fluid 21A, which is a supply airflow. The first fluid 21A flows through the air supply channel, and is blown out of the supply air duct 202 into the room. That is, the air supply blower 205 causes the first fluid 21A to flow into the flow channels 123A and into the flow channels 124B of the total heat exchange element 10.

The exhaust blower 206 is disposed in the exhaust channel. The exhaust blower 206 corresponds to a second blower. The exhaust blower 206 functions to take indoor air through the return air duct 203 into the exhaust channel to generate the second fluid 21B, which is an exhaust airflow. The second fluid 21B flows through the exhaust channel, and is blown out of the exhaust air duct 204 to outside the room. That is, the exhaust blower 206 causes the second fluid 21B to flow into the flow channels 123B and into the flow channels 124A of the total heat exchange element 10.

The total heat exchange element 10 is disposed in the casing 210 at a position where the air supply channel and the exhaust channel intersect each other.

Upon start of the air supply blower 205, the first fluid 21A flows in through the outdoor air duct 201, passes through the total heat exchange element 10, and flows through the supply air duct 202 into the room. In addition, upon start of the exhaust blower 206, the second fluid 21B flows in through the return air duct 203, passes through the total heat exchange element 10, and flows through the exhaust air duct 204 to outside the room. The first fluid 21A and the second fluid 21B are airflows flowing countercurrent to each other in the area of the countercurrent flow portions 12A and 12B of the flow channel plates 11 of the total heat exchange element 10. This causes total heat exchange to occur, thereby enabling efficient heat exchange to be provided.

The total heat exchange ventilator 200 according to the first embodiment includes the foregoing flow channel plates 11, thereby enabling production thereof in an uncomplicated manufacturing process, and the gas blocking property and the moisture permeability to be improved as compared to conventional ones. Thus, the total heat exchange ventilator 200 has total heat exchange efficiency improved as compared to conventional ones.

### Example 1

The flow channel plate 11 and the total heat exchange element 10 described in connection with the first embodiment will be specifically described below with respect to examples and comparative examples. The flow channel plate 11 and the total heat exchange element 10 according to the first embodiment should not be construed as limited by these examples, and a variety of applications are possible without departing from the technical scope of the present disclosure.

The materials used in the examples and comparative examples will next be described.

### < First base material> Not falling under scope of the claims.

Two polypropylenes each having a long chain branched hydrocarbon structure, produced by polymerization using a metallocene catalyst, are used as the first base material. One is a product having a trade name of Waymax MFX8 manufactured by Japan Polypropylene Corporation, and the other is a product having a trade name of Waymax MFX6 manufactured by Japan Polypropylene Corporation. Waymax MFX8 is hereinafter designated PP1, and Waymax MFX6 is hereinafter designated PP2. PP1 is a material having a lower melt flow rate, a higher melt strength at 230°C, a lower flexural modulus of elasticity, a lower flexural strength, and a lower nominal tensile strain at break, than those of PP2.

### <Second base material (Falling under the scope of the claims)

A polypropylene with addition of a low-density polyethylene having a branched structure is used as the second base material. A product having a trade name of Novatec PP BC03B manufactured by Japan Polypropylene Corporation, which is a block polymer, is used as the polypropylene. A product having a trade name of Novatec LD ZE41K manufactured by Japan Polyethylene Corporation, which is a high-pressure process low-density polyethylene, is used as the low-density polyethylene having a branched structure. Novatec PP BC03B is hereinafter designated PP3, and Novatec LD ZE41K is hereinafter designated LDPE.

### <Moisture permeable material>

A product having a trade name of Pebax (registered trademark) MV1074 manufactured by Arkema, which is a polyether block amide copolymer, is used as the moisture permeable material. Pebax MV1074 is hereinafter designated PEBA.

### <Compatibilizing agent>

A product having a trade name of Umex (registered trademark) 1010 manufactured by Sanyo Chemical Industries, Ltd., which is a polypropylene resin containing maleic anhydride, is used as the compatibilizing agent. Umex 1010 is hereinafter designated MA-g-PP.

The method of manufacturing the flow channel plate 11 used in Examples 1 through 28 and Comparative Examples 1 through 12 will next be described. Table 1 is a table summarizing the components of the resin composition included in the flow channel plate in each of Examples and Comparative Examples.

**Table 1: (Only Examples 10-14 and 21-28 fall under the scope of the claims)**

| | Resin composition | | | | | | | | |
|---|---|---|---|---|---|---|---|---|---|
| | Base material | | | | | | Moisture permeable material | Compatibilizing agent | Content [wt%] of base material relative to total amount of base material and moisture permeable material |
| | First base material | | Second base material | | | | | | |
| | PP1 [wt%] | PP2 [wt%] | PP3 [wt%] | LDPE [wt%] | PP3+ LDPE [wt%] | LDPE content [wt%] relative to total amount of PP3 and LDPE | PEBA [wt%] | MA-g-PP [wt%] | |
| Example 1 | 80.75 | 0 | 0 | 0 | 0 | - | 14.25 | 5 | 85 |
| Example 2 | 66.5 | 0 | 0 | 0 | 0 | - | 28.5 | 5 | 70 |
| Example 3 | 47.5 | 0 | 0 | 0 | 0 | - | 47.5 | 5 | 50 |
| Example 4 | 19.0 | 0 | 0 | 0 | 0 | - | 76.0 | 5 | 20 |
| Example 5 | 9.5 | 0 | 0 | 0 | 0 | - | 85.5 | 5 | 10 |
| Example 6 | 45 | 0 | 0 | 0 | 0 | - | 45 | 10 | 50 |
| Example 7 | 40 | 0 | 0 | 0 | 0 | - | 40 | 20 | 50 |
| Example 8 | 85 | 0 | 0 | 0 | 0 | - | 15 | 0 | 85 |
| Example 9 | 10 | 0 | 0 | 0 | 0 | - | 90 | 0 | 10 |
| Example 10 | 0 | 0 | 48.45 | 32.3 | 80.75 | 40.00 | 14.25 | 5 | 85 |
| Example 11 | 0 | 0 | 56.53 | 24.22 | 80.75 | 29.99 | 14.25 | 5 | 85 |
| Example 12 | 0 | 0 | 5.7 | 3.8 | 9.5 | 40.00 | 85.5 | 5 | 10 |
| Example 13 | 0 | 0 | 51 | 34 | 85 | 40.00 | 15 | 0 | 85 |
| Example 14 | 0 | 0 | 6 | 4 | 10 | 40.00 | 90 | 0 | 10 |
| Example 15 | 0 | 80.75 | 0 | 0 | 0 | - | 14.25 | 5 | 85 |
| Example 16 | 0 | 9.5 | 0 | 0 | 0 | - | 85.5 | 5 | 10 |
| Example 17 | 0 | 85 | 0 | 0 | 0 | - | 15 | 0 | 85 |
| Example 18 | 0 | 10 | 0 | 0 | 0 | - | 90 | 0 | 10 |
| Example 19 | 68 | 0 | 0 | 0 | 0 | - | 12 | 20 | 85 |
| Example 20 | 8 | 0 | 0 | 0 | 0 | - | 72 | 20 | 10 |
| Example 21 | 0 | 0 | 48.45 | 32.3 | 80.75 | 40.00 | 14.25 | 5 | 85 |
| Example 22 | 0 | 0 | 56.53 | 24.22 | 80.75 | 29.99 | 14.25 | 5 | 85 |
| Example 23 | 0 | 0 | 5.7 | 3.8 | 9.5 | 40.00 | 85.5 | 5 | 10 |
| Example 24 | 0 | 0 | 6.65 | 2.85 | 9.5 | 30.00 | 85.5 | 5 | 10 |
| Example 25 | 0 | 0 | 51 | 34 | 85 | 40.00 | 15 | 0 | 85 |
| Example 26 | 0 | 0 | 6 | 4 | 10 | 40.00 | 90 | 0 | 10 |
| Example 27 | 0 | 0 | 40.8 | 27.2 | 68 | 40.00 | 12 | 20 | 85 |
| Example 28 | 0 | 0 | 4.8 | 3.2 | 8 | 40.00 | 72 | 20 | 10 |
| Comparative Example 1 | 100 | 0 | 0 | 0 | 0 | - | 0 | 0 | 100 |
| Comparative Example 2 | 72 | 0 | 0 | 0 | 0 | - | 8 | 20 | 90 |
| Comparative Example 3 | 4 | 0 | 0 | 0 | 0 | - | 76 | 20 | 5 |
| Comparative Example 4 | 0 | 0 | 0 | 0 | 0 | - | 100 | 0 | 0 |
| Comparative Example 5 | 35 | 0 | 0 | 0 | 0 | - | 35 | 30 | 50 |
| Comparative Example 6 | 0 | 0 | 80.75 | 0 | 80.75 | 0.00 | 14.25 | 5 | 85 |
| Comparative Example 7 | 0 | 0 | 80 | 0 | 80 | 0.00 | 0 | 20 | 100 |
| Comparative Example 8 | 0 | 0 | 23.75 | 23.75 | 47.5 | 50.00 | 47.5 | 5 | 50 |
| Comparative Example 9 | 0 | 100 | 0 | 0 | 0 | - | 0 | 0 | 100 |
| Comparative Example 10 | 0 | 72 | 0 | 0 | 0 | - | 8 | 20 | 90 |
| Comparative Example 11 | 0 | 4 | 0 | 0 | 0 | - | 76 | 20 | 5 |
| Comparative Example 12 | 0 | 35 | 0 | 0 | 0 | - | 35 | 30 | 50 |

The base material, PEBA used as the moisture permeable material, and MA-g-PP used as the compatibilizing agent are blended at the ratios shown in Table 1. Each of the blends obtained is extruded at a resin temperature of 230°C using a T-die method with a single-spindle extruder having a screw diameter φ of 40 mm to form a sheet having a thickness of 400 µm. The flow channel plate 11 is manufactured by vacuum forming using the sheet obtained.

Examples 1 through 28 and Comparative Examples 1 through 12 have used, in the above production method, the ratios by weight of the base material, of PEBA, and of MAg-PP used, varied as shown in the resin composition fields of Table 1. In addition, when the second base material is used as the base material, the ratio between PP3 and LDPE in the second base material is varied as shown in Table 1.

Lastly, the flow channel plates 11 obtained are combined together to produce a unit stack. In one example, the first flow channel plate 11A illustrated in FIG. 2 and the second flow channel plate 11B illustrated in FIG. 4 are stacked one on top of another to produce a unit stack. The unit stack is configured such that the ribs 131A of the header portions 13A of the first flow channel plate 11A and the ribs 131B of the header portions 13B of the second flow channel plate 11B extend in directions that intersect each other. In this respect, the countercurrent flow portions 12A and 12B of the flow channel plates 11 each had a square shape of 30 cm × 30 cm. Then, stacking multiple unit stacks one on top of another produced the total heat exchange element 10 having a height of 50 cm as illustrated in FIG. 1.

Performance is evaluated on the flow channel plate 11 and on the total heat exchange element 10 using the flow channel plate 11 each obtained in Examples 1 through 28 and Comparative Examples 1 through 12. The performance of the flow channel plate 11 is evaluated in terms of tensile strength [MPa] and tensile elongation [%] at a high temperature, gas blocking property, and moisture permeability. Table 2 is a table summarizing an example of evaluation results of the flow channel plates in Examples and Comparative Examples.

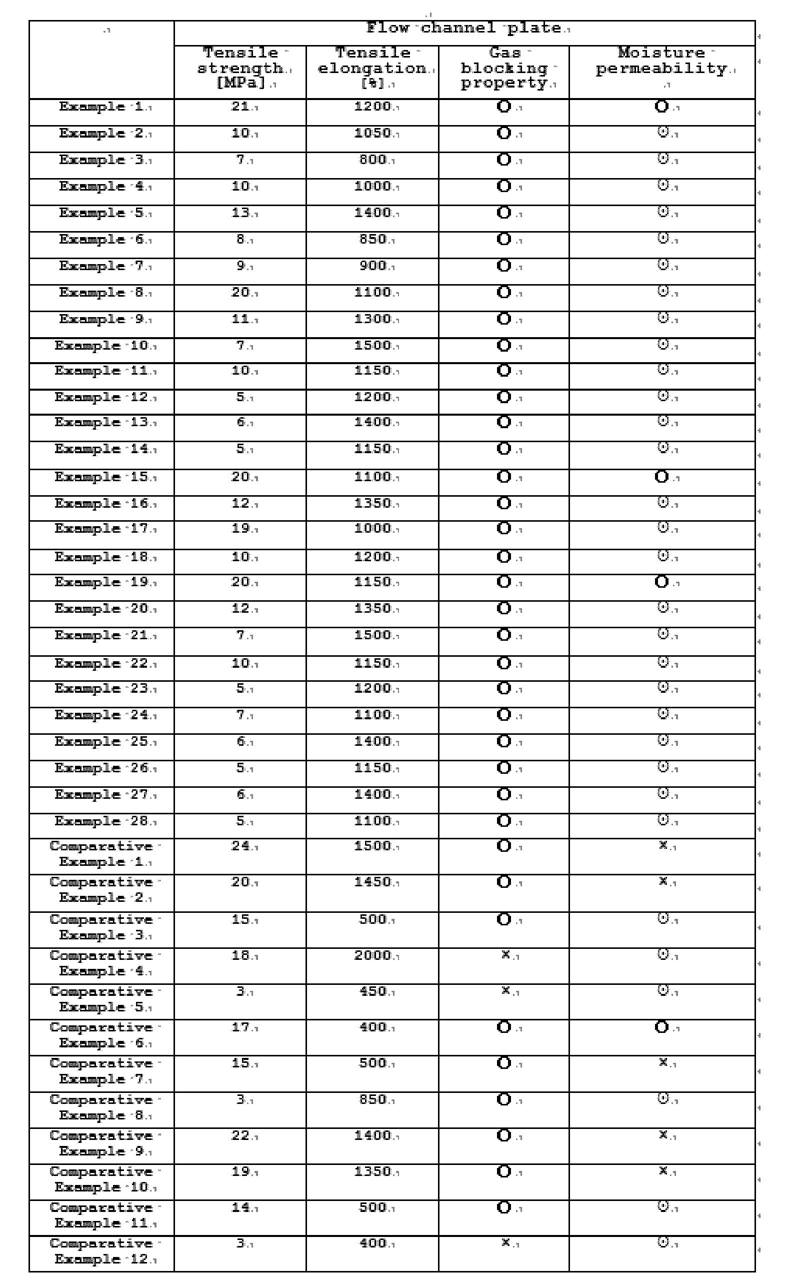

Evaluation methods for the properties will next be described.

### <Tensile strength and tensile elongation of flow channel plate 11 at high temperature>

The sheet obtained in each of Examples 1 through 28 and Comparative Examples 1 through 12 is die-cut using a die-cutter to obtain a specimen. Note that tests are performed according to Japanese Industrial Standard (JIS) K 7127. Note that the specimen had a shape of specimen type 5 specified in JIS K 7127. In addition, the test temperature is 110°C. Moreover, a tensile strength of 5 MPa or higher is determined to be satisfactory, and a tensile elongation of 700% or higher is determined to be satisfactory.

### <Gas blocking property of flow channel plate 11>

The gas blocking property of the flow channel plate 11 is evaluated by measurement of the air permeability of the flow channel plate 11 according to JIS P 8117. That is, the air permeability is determined by measurement of the time (herein, in seconds) required for air of a volume of 100 cm³, i.e., 100 mL, to pass through a portion having an area of 645 mm² of the flow channel plate 11. In addition, the air permeability of the flow channel plate 11 is measured at arbitrary five points on the flow channel plate 11. In this evaluation, the gas blocking property is determined to be satisfactory when the air permeability levels at the arbitrary five points on the flow channel plate 11 are all 5000 seconds or more, while the gas blocking property is determined to be unsatisfactory when any one of the air permeability levels at the arbitrary five points on the flow channel plate 11 is less than 5000 seconds. Table 2 shows gas blocking property determined to be satisfactory by a circle symbol (O), and gas blocking property determined to be unsatisfactory by a cross symbol (×).

### <Moisture permeability of flow channel plate 11>

The moisture permeability of the flow channel plate 11 is evaluated by moisture permeability level measurement according to JIS K 7129 using an infrared sensor method, i.e., a MOCON method, under conditions of a relative humidity of 100% and a temperature of 30°C. That is, the amount of water vapor that has transmitted through the specimen is detected by an infrared sensor, and then the water vapor permeability level, which is the moisture permeability level, is calculated from comparison with the value of a reference specimen. In addition, the moisture permeability level of the flow channel plate 11 is measured at arbitrary five points on the flow channel plate 11. The moisture permeability level of the flow channel plate 11 is evaluated using the moisture permeability levels measured at these five points. In this evaluation, the moisture permeability is determined to be satisfactory when the moisture permeability levels at the arbitrary five points on the flow channel plate 11 are all 0.01 kg/m²/day or higher. The moisture permeability is determined to be slightly satisfactory when the moisture permeability levels at the arbitrary five points on the flow channel plate 11 are all 0.001 kg/m²/day or higher, but the moisture permeability levels are not 0.01 kg/m²/day or higher at all of the five points. The moisture permeability is determined to be unsatisfactory when any one of the moisture permeability levels at the arbitrary five points on the flow channel plate 11 is less than 0.001 kg/m²/day. Table 2 shows moisture permeability determined to be satisfactory by a double circle (⊙), moisture permeability determined to be slightly satisfactory by a circle symbol (O), and moisture permeability determined to be unsatisfactory by a cross symbol (×).

### <Evaluation result>

Tables 1 and 2 show that the flow channel plates 11 produced using the ratios of PP1, PP2, PP3, LDPE, the moisture permeable material, and the compatibilizing agent illustrated in Examples 1 through 28 satisfy the performance required for the flow channel plate 11 in terms of all of tensile strength, tensile elongation, gas blocking property, and moisture permeability as compared to the flow channel plates of Comparative Examples 1 through 12.

The results of Examples 1 through 28 and Comparative Examples 1 through 12 show that a satisfactory flow channel plate 11 is obtainable when the base material has a content ranging from 10 wt% to 85 wt% relative to the total weight of the base material and PEBA, which is the moisture permeable material, in the resin composition. Note that when a second base material that is PP3 with addition of LDPE is used as the base material, a satisfactory flow channel plate 11 is obtainable when LDPE has a content greater than 0 wt% and less than or equal to 40 wt% relative to the total weight of PP3 and LDPE. In addition, when MA-g-PP is used as the compatibilizing agent, a satisfactory flow channel plate 11 is obtainable when the base material has a content ranging from 10 wt% to 85 wt% relative to the total weight of the base material and PEBA, which is the moisture permeable material, in the resin composition, and MA-g-PP, which is the compatibilizing agent, has a content greater than 0 wt% and less than or equal to 20 wt% in the resin composition.

Interpretation of factors of determination as unsatisfactory in evaluation of Comparative Examples 1 through 12 will next be described. In Comparative Examples 1, 2, 7, 9, and 10, the moisture permeability has been evaluated and determined as unsatisfactory. In Comparative Examples 1, 2, 7, 9, and 10, PEBA for providing moisture permeability is not contained, or the ratio of PEBA is less than the ratio in the cases in which the moisture permeability has been determined as satisfactory or slightly satisfactory. That is, it is thought that sufficient moisture permeability is unobtainable due to an insufficient content of PEBA.

In Comparative Examples 3 and 11, the tensile elongation has been evaluated and determined as unsatisfactory. In Comparative Examples 3 and 11, it is thought that a high content of PEBA has caused hydrolysis of part of PEBA by MA-g-PP, thereby causing cutting of the polymer chain to occur, and thus expected tensile elongation is not obtained.

In Comparative Example 4, the gas blocking property has been evaluated and determined as unsatisfactory. In Comparative Example 4, the resin composition contained only a component of PEBA, and it is thought that this result is because PEBA alone is not sufficient to provide an expected effect of gas blocking property.

In Comparative Examples 5 and 12, the tensile strength, the tensile elongation, and the gas blocking property have been evaluated and determined as unsatisfactory. In Comparative Examples 5 and 12, it is thought that a high content of MA-g-PP has caused hydrolysis of PEBA and thermal degradation of MA-g-PP itself as well, thereby expected tensile strength, tensile elongation, and gas blocking property are not obtained.

In Comparative Example 6, the tensile elongation has been evaluated and determined as unsatisfactory. In Comparative Example 6, the second base material is used in which LDPE is not added to PP3. In a polypropylene having no long-chain branched structure, addition of LDPE causes tangling of polymer chains, thereby increasing tensile elongation. It is therefore thought that when no LDPE is added to PP3, no tangling of polymer chains occurs, thereby expected tensile elongation is not obtained.

In Comparative Example 8, the tensile strength has been evaluated and determined as unsatisfactory. In Comparative Example 8, the content of LDPE is relatively high with respect to the content of PP3. It is thought that this result is because LDPE itself has a low tensile strength, and a higher LDPE content reduces compatibility with PP3 causing incompatibility, thereby expected tensile strength is not obtained.

Note that the examples have been described in which the base material, the moisture permeable material, and the compatibilizing agent are the foregoing materials, but similar results are obtainable even when other materials are used.

The configurations described in the foregoing embodiment are merely examples. These configurations may be combined with a known other technology, and moreover, part of such configurations may be omitted and/or modified.

### Reference Signs List

10 total heat exchange element; 11 flow channel plate; 11A first flow channel plate; 11B second flow channel plate; 12A, 12B countercurrent flow portion; 13A, 13B header portion; 15 first inlet port; 16 first outlet port; 17 second inlet port; 18 second outlet port; 21A first fluid; 21B second fluid; 121A, 121B protruding portion; 122A, 122B recessed portion; 123A, 123B, 124A, 124B, 132A, 133A, 132B, 133B flow channel; 131A, 131B rib; 200 total heat exchange ventilator; 201 outdoor air duct; 202 supply air duct; 203 return air duct; 204 exhaust air duct; 205 air supply blower; 206 exhaust blower; 210 casing.

## Claims

1. A total heat exchange element-purpose flow channel plate (11) formed from a resin composition having heat conductivity and moisture permeability, the resin composition comprising:
at least one base material; and
a moisture permeable material being a block copolymer based on a polyethylene glycol as a raw material, wherein
the resin composition is molded to form a sheet, and the sheet is shaped into a corrugated form,
the base material has a content ranging from 10% by weight to 85% by weight relative to a total weight of the base material and the moisture permeable material,
the base material is a polypropylene with addition of a low-density polyethylene having a branched structure, and
the base material contains the low-density polyethylene having a branched structure in a content greater than 0% and less than or equal to 40% by weight relative to the polypropylene with addition of a low-density polyethylene having a branched structure.

2. The total heat exchange element-purpose flow channel plate (11) according to claim 1, wherein
the moisture permeable material is at least one copolymer selected from a group of a polyethylene glycol-polyamide block copolymer, a polyethylene glycol-polyester block copolymer, a polyethylene glycol-polyurethane block copolymer, and a polyether block amide copolymer.

3. The total heat exchange element-purpose flow channel plate (11) according to claim 1 or 2, wherein
the resin composition further comprises a compatibilizing agent to increase compatibility between the base material and the moisture permeable material.

4. The total heat exchange element-purpose flow channel plate (11) according to claim 3, wherein
the compatibilizing agent is at least one material of a graft copolymer, a polyolefin, or a sterically hindered amine ether-based compound, the graft copolymer having a main chain having a structure of a polyolefin-based polymer, and a side chain having a structure of a vinyl-based polymer being bonded to the main chain, the polyolefin being modified by carboxylic anhydride or maleic anhydride.

5. The total heat exchange element-purpose flow channel plate (11) according to claim 3, wherein the compatibilizing agent is a polypropylene resin containing carboxylic anhydride.

6. A method of manufacturing a total heat exchange element-purpose flow channel plate (11), the method comprising:
a resin composition production step of manufacturing a resin composition by mixing together:
at least one base material, and a moisture permeable material, wherein
the base material and the moisture permeable material are mixed together to cause the base material to have a content ranging from 10% by weight to 85% by weight relative to a total weight of the base material and the moisture permeable material,
the base material is a polypropylene with addition of a low-density polyethylene having a branched structure,
the base material contains the low-density polyethylene having a branched structure in a content greater than 0% less than or equal to 40% by weight relative to the polypropylene with addition of a low-density polyethylene having a branched structure,
the moisture permeable material is a block copolymer based on a polyethylene glycol as a raw material, and
a molding step of molding the resin composition into a sheet-like shape to form a sheet; and
a shaping step of shaping the sheet into a corrugated form.

7. The method of manufacturing a total heat exchange element-purpose flow channel plate (11), according to claim 6, wherein
in the resin composition production step, a compatibilizing agent to increase compatibility between the base material and the moisture permeable material is further mixed to generate the resin composition.

8. The method of manufacturing a total heat exchange element-purpose flow channel plate (11), according to claim 7, wherein
the compatibilizing agent is a polypropylene resin containing carboxylic anhydride, and
in the resin composition production step, the polypropylene resin containing carboxylic anhydride has a content less than or equal to 20% by weight relative to the resin composition.

9. The method of manufacturing a total heat exchange element-purpose flow channel plate (11), according to any one of claims 6 to 8, wherein
in the shaping step, the sheet is hot formed by one of hot press forming, pleat forming, and vacuum forming.

10. A total heat exchange element (10) comprising:
first flow channel plates (11A) and second flow channel plates (11B) each being the total heat exchange element-purpose flow channel plate according to any one of claims 1 to 5, and each having a corrugated form formed by recessed portions (122A, 122B) and protruding portions (121A, 121B) each extending in one direction, arranged in parallel alternately and consecutively, wherein
the first flow channel plates (11A) and the second flow channel plates (11B) are alternately stacked one on top of another to arrange:
that an opening of a first flow channel (123A) is closed by a bottom of a second flow channel (123B); and
that an opening of a third flow channel (124B) is closed by a bottom of a fourth flow channel (124A), wherein
the first flow channel (123A) is formed by each of the recessed portions (122A) of each of the first flow channel plates (11A);
the second flow channel (123B) is formed by each of the recessed portions (122B) of each of the second flow channel plates (11B);
the third flow channel (124B) being formed by each of the protruding portions (121B) of each of the second flow channel plates (11B); and
the fourth flow channel (124A) is formed by each of the protruding portions (121A) of each of the first flow channel plates (11A), wherein
sensible heat and latent heat are exchanged between a first fluid (21A) and a second fluid (21B), the first fluid (21A) flowing through the first flow channel (123A) and the third flow channel (124B), the second fluid (21B) flowing through the second flow channel (123B) and the fourth flow channel (124A).

11. A total heat exchange ventilator (200) comprising:
the total heat exchange element according (10) to claim 10;
a first blower (205) adapted to cause the first fluid (21A) to flow into the first flow channel (123A) and the third flow channel (124B); and
a second blower (206) adapted to cause the second fluid (21B) to flow into the second flow channel (123B) and the fourth flow channel(124A).

## Patentansprüche

1. Strömungskanalplatte (11) für einen Gesamtwärmetausch, die aus einer Harzzusammensetzung ausgebildet ist, welche wärmeleitfähig und feuchtigkeitsdurchlässig ist, wobei die Harzzusammensetzung Folgendes umfasst:
zumindest ein Basismaterial; und
ein feuchtigkeitsdurchlässiges Material, das ein Blockcopolymer auf Basis eines Polyethylenglykols als Rohmaterial ist, wobei
die Harzzusammensetzung geformt ist, um eine Folie auszubilden, und die Folie in eine gewellte Form gebracht ist,
das Basismaterial einen Gehalt von 10 Gew.-% bis 85 Gew.-% bezogen auf das Gesamtgewicht des Basismaterials und des feuchtigkeitsdurchlässigen Materials aufweist,
das Basismaterial ein Polypropylen mit Zusatz eines Polyethylens mit geringer Dichte, das eine verzweigten Struktur aufweist, ist; und
das Basismaterial das Polyethylen mit geringer Dichte, das eine verzweigte Struktur aufweist, in einem Gehalt von größer als 0 Gew.-% und kleiner oder gleich 40 Gew.-% bezogen auf das Polypropylen mit Zusatz eines Polyethylens mit geringer Dichte, das eine verzweigte Struktur aufweist, enthält.

2. Strömungskanalplatte (11) für einen Gesamtwärmetausch nach Anspruch 1, wobei
das feuchtigkeitsdurchlässige Material zumindest ein Copolymer ausgewählt aus der Gruppe bestehend aus einem Polyethylenglykol-Polyamid-Blockcopolymer, einem Polyethylenglykol-Polyester-Blockcopolymer, einem Polyethylenglykol-Polyurethan-Blockcopolymer und einem Polyether-Block-Amid-Copolymer ist.

3. Strömungskanalplatte (11) für einen Gesamtwärmetausch nach Anspruch 1 oder 2, wobei
die Harzzusammensetzung ferner ein Kompatibilisierungsmittel zum Erhöhen der Kompatibilität zwischen dem Basismaterial und dem feuchtigkeitsdurchlässigen Material umfasst.

4. Strömungskanalplatte (11) für einen Gesamtwärmetausch nach Anspruch 3, wobei
das Kompatibilisierungsmittel zumindest ein Material aus einem Pfropfcopolymer, einem Polyolefin oder einer Verbindung auf Basis eines sterisch gehinderten Aminethers ist, wobei das Pfropfcopolymer eine Hauptkette mit der Struktur eines Polymers auf Polyolefinbasis und eine an die Hauptkette gebundene Seitenkette mit der Struktur eines Polymers auf Vinylbasis aufweist, wobei das Polyolefin durch Carbonsäureanhydrid oder Maleinsäureanhydrid modifiziert ist.

5. Strömungskanalplatte (11) für einen Gesamtwärmetausch nach Anspruch 3, wobei das Kompatibilisierungsmittel ein Polypropylenharz ist, das Carbonsäureanhydrid enthält.

6. Verfahren zur Herstellung einer Strömungskanalplatte (11) für einen Gesamtwärmetausch, wobei das Verfahren Folgendes umfasst:
einen Harzzusammensetzungserzeugungsschritt des Herstellens einer Harzzusammensetzung durch Vermischen von:
zumindest einem Basismaterial und einem feuchtigkeitsdurchlässigen Material, wobei
das Basismaterial und das feuchtigkeitsdurchlässige Material vermischt werden, um zu bewirken, dass das Basismaterial einen Gehalt im Bereich von 10 Gew.-% bis 85 Gew.-% bezogen auf das Gesamtgewicht des Basismaterials und des feuchtigkeitsdurchlässigen Materials aufweist,
das Basismaterial ein Polypropylen mit Zusatz eines Polyethylens mit geringer Dichte, das eine verzweigten Struktur aufweist, ist; und
das Basismaterial das Polyethylen mit geringer Dichte, das eine verzweigte Struktur aufweist, in einem Gehalt von größer als 0 Gew.-% und kleiner oder gleich 40 Gew.-% bezogen auf das Polypropylen mit Zusatz eines Polyethylens mit geringer Dichte, das eine verzweigten Struktur aufweist, enthält,
das feuchtigkeitsdurchlässige Material ein Blockcopolymer auf Basis eines Polyethylenglykols als Rohmaterial ist, und
einen Formschritt des Formens der Harzzusammensetzung zu einer folienartigen Form zum Ausbilden einer Folie; und
einen Formgebungsschritt des Bringens der Folie in eine gewellte Form.

7. Verfahren zur Herstellung einer Strömungskanalplatte (11) für einen Gesamtwärmetausch nach Anspruch 6, wobei
im Harzzusammensetzungserzeugungsschritt ein Kompatibilisierungsmittel zum Erhöhen der Kompatibilität zwischen dem Basismaterial und dem feuchtigkeitsdurchlässigen Material ferner beigemischt wird, um die Harzzusammensetzung zu erhalten.

8. Verfahren zur Herstellung einer Strömungskanalplatte (11) für einen Gesamtwärmetausch nach Anspruch 7, wobei
das Kompatibilisierungsmittel ein Polypropylenharz ist, das Carbonsäureanhydrid enthält, und
im Harzzusammensetzungserzeugungsschritt das Polypropylenharz, welches Carbonsäureanhydrid enthält, einen Gehalt von kleiner oder gleich 20 Gew.-% bezogen auf die Harzzusammensetzung aufweist.

9. Verfahren zur Herstellung einer Strömungskanalplatte (11) für einen Gesamtwärmetausch nach einem der Ansprüche 6 bis 8, wobei
im Formgebungsschritt die Folie durch eines aus Heißpressformen, Falzformen und Vakuumformen heißgeformt wird.

10. Gesamtwärmetauschelement (10), umfassend:
erste Strömungskanalplatten (11A) und zweite Strömungskanalplatten (11B), die jeweils eine Strömungskanalplatte für einen Gesamtwärmetausch nach einem der Ansprüche 1 bis 5 sind und jeweils eine gewellte Form aufweisen, die durch Ausbilden von vertieften Abschnitten (122A, 122B) und erhöhten Abschnitten (121A, 121B) ausgebildet ist, die sich jeweils in eine Richtung erstrecken und abwechselnd und aufeinanderfolgend parallel angeordnet sind, wobei
die ersten Strömungskanalplatten (11A) und die zweiten Strömungskanalplatten (11B) abwechselnd übereinandergestapelt sind, um Folgendes anzuordnen:
dass eine Öffnung eines ersten Strömungskanals (123A) durch einen Boden eines zweiten Strömungskanals (123B) verschlossen ist; und
dass eine Öffnung eines dritten Strömungskanals (124B) durch einen Boden eines vierten Strömungskanals (124A) verschlossen ist; wobei
der erste Strömungskanal (123A) durch jeden der vertieften Abschnitte (122A) von jeder der ersten Strömungskanalplatten (11A) ausgebildet ist;
der zweite Strömungskanal (123B) durch jeden der vertieften Abschnitte (122B) von jeder der zweiten Strömungskanalplatten (11B) ausgebildet ist;
der dritte Strömungskanal (124B) durch jeden der erhöhten Abschnitte (121B) von jeder der zweiten Strömungskanalplatten (11B) ausgebildet ist; und
der vierte Strömungskanal (124A) durch jeden der erhöhten Abschnitte (121B) von jeder der ersten Strömungskanalplatten (11A) ausgebildet ist, wobei
fühlbare Wärme und latente Wärme zwischen einem ersten Fluid (21A) und einem zweiten Fluid (21B) ausgetauscht werden, wobei das erste Fluid (21A) durch den ersten Strömungskanal (123A) und den dritten Strömungskanal (124B) strömt, das zweite Fluid (21B) durch den zweiten Strömungskanal (123B) und den vierten Strömungskanal (124A) strömt.

11. Gesamtwärmetauschventilator (200), umfassend:
ein Gesamtwärmetauschelement (10) nach Anspruch 10;
ein erstes Gebläse (205), das geeignet ist, um zu bewirken, dass das erste Fluid (21A) in den ersten Strömungskanal (123A) und den dritten Strömungskanal (124B) strömt; und
ein zweites Gebläse (206), das geeignet ist, um zu bewirken, dass das zweite Fluid (21B) in den zweiten Strömungskanal (123B) und den vierten Strömungskanal (124A) strömt.

## Revendications

1. Plaque de circuit d'écoulement pour élément d'échange de chaleur totale (11) formée à partir d'une composition de résine ayant une conductivité thermique et une perméabilité à l'humidité, la composition de résine comprenant :
au moins un matériau de base ; et
un matériau perméable à l'humidité qui est un copolymère bloc à base de polyéthylène glycol en guise de matière première, dans laquelle
la composition de résine est moulée afin de former une feuille, et la feuille est mise en forme en une forme ondulée,
le matériau de base présente une teneur comprise entre 10 % en poids et 85 % en poids par rapport à un poids total du matériau de base et du matériau perméable à l'humidité,
le matériau de base est un polypropylène avec l'ajout d'un polyéthylène à faible densité ayant une structure ramifiée, et
le matériau de base contient le polyéthylène à faible densité ayant une structure ramifiée selon une teneur supérieure à 0 % et inférieure ou égale à 40 % en poids par rapport au polypropylène avec l'ajout d'un polyéthylène à faible densité ayant une structure ramifiée.

2. Plaque de circuit d'écoulement pour élément d'échange de chaleur totale (11) selon la revendication 1, dans laquelle
le matériau perméable à l'humidité est au moins un copolymère choisi parmi un groupe d'un copolymère bloc de polyéthylène glycol-polyamide, un copolymère bloc de polyéthylène glycol-polyester, un copolymère bloc de polyéthylène glycol-polyuréthane, et un copolymère amide à bloc de polyéther.

3. Plaque de circuit d'écoulement pour élément d'échange de chaleur totale (11) selon la revendication 1 ou 2, dans laquelle
la composition de résine comprend en outre un agent de compatibilisation destiné à augmenter la compatibilité entre le matériau de base et le matériau perméable à l'humidité.

4. Plaque de circuit d'écoulement pour élément d'échange de chaleur totale (11) selon la revendication 3, dans laquelle
l'agent de compatibilisation est au moins un matériau parmi un copolymère greffé, un polyoléfine, ou un composé à base d'éther amine bloqué de manière stérique, le copolymère greffé ayant une chaîne principale ayant une structure d'un polymère à base de polyoléfine, et une chaîne secondaire ayant une structure d'un polymère à base de vinyle liée à la chaîne principale, le polyoléfine étant modifié par un anhydride carboxylique ou un anhydride maléique.

5. Plaque de circuit d'écoulement pour élément d'échange de chaleur totale (11) selon la revendication 3, dans laquelle l'agent de compatibilisation est une résine de polypropylène contenant un anhydride carboxylique.

6. Procédé de fabrication d'une plaque de circuit d'écoulement pour élément d'échange de chaleur totale (11), le procédé comprenant :
une étape de production de composition de résine qui consiste à fabriquer une composition de résine en mélangeant ensemble :
au moins un matériau de base, et un matériau perméable à l'humidité, dans lequel
le matériau de base et le matériau perméable à l'humidité sont mélangés ensemble afin que le matériau de base présente une teneur comprise entre 10 % en poids et 85 % en poids par rapport à un poids total du matériau de base et du matériau perméable à l'humidité,
le matériau de base est un polypropylène avec l'ajout d'un polyéthylène à faible densité ayant une structure ramifiée,
le matériau de base contient le polyéthylène à faible densité ayant une structure ramifiée selon une teneur supérieure à 0 % et inférieure ou égale à 40 % en poids par rapport au polypropylène avec l'ajout d'un polyéthylène à faible densité ayant une structure ramifiée,
le matériau perméable à l'humidité est un copolymère bloc à base de polyéthylène glycol en guise de matière première, et
une étape de moulage qui consiste à mouler la composition de résine en une forme de feuille afin de former une feuille ; et
une étape de mise en forme qui consiste à mettre en forme la feuille en une forme ondulée.

7. Procédé de fabrication d'une plaque de circuit d'écoulement pour élément d'échange de chaleur totale (11) selon la revendication 6, dans lequel
à l'étape de production de la composition de résine, un agent de compatibilisation destiné à augmenter la compatibilité entre le matériau de base et le matériau perméable à l'humidité est en outre mélange afin de générer la composition de résine.

8. Procédé de fabrication d'une plaque de circuit **d'écoulement** pour élément d'échange de chaleur totale (11) selon la revendication 7, dans lequel
l'agent de compatibilisation est une résine de polypropylène contenant un anhydride carboxylique, et
à l'étape de production de la composition de résine, la résine de polypropylène qui contient un anhydride carboxylique présente une teneur inférieure ou égale à 20 % en poids par rapport à la composition de résine.

9. Procédé de fabrication d'une plaque de circuit **d'écoulement** pour élément d'échange de chaleur totale (11) selon l'une quelconque des revendications 6 à 8**,** dans lequel
à l'étape de mise en forme, la feuille est formée à chaud par l'un d'un formage par presse à chaud, d'un formage par plis, et d'un formage sous vide.

10. Élément d'échange de chaleur totale (10) comprenant :
des premières plaques de circuit d'écoulement (11A) et des deuxièmes plaques de circuit d'écoulement (11B) qui sont chacune la plaque de circuit d'écoulement pour élément d'échange de chaleur totale selon l'une quelconque des revendications 1 à 5, et ayant chacune une forme ondulée formée par des parties renfoncées (122A, 122B) et des parties en saillie (121A, 121B) qui s'étendent chacune dans une direction, disposées en parallèle de manière alternée et consécutive, dans lequel
les premières plaques de circuit **d'écoulement** (11A) et les deuxièmes plaques de circuit **d'écoulement** (11B) sont empilées de manière alternée les unes sur les autres afin que :
une ouverture d'un premier circuit d'écoulement (123A) soit fermée par un fond d'un deuxième circuit d'écoulement (123B) ; et
une ouverture d'un troisième circuit d'écoulement (124B) soit fermée par un fond d'un quatrième circuit d'écoulement (124A), dans lequel
le premier circuit **d'écoulement** (123A) est formé par chacune des parties renfoncées (122A) de chacune des premières plaques de circuit d'écoulement (11A) ;
le deuxième circuit d'écoulement (123B) est formé par chacune des parties renfoncées (122B) de chacune des deuxièmes plaques de circuit d'écoulement (11B) ;
le troisième circuit d'écoulement (124B) étant formé par chacune des parties en saillie (121B) de chacune des deuxièmes plaques de circuit d'écoulement (11B) ; et
le quatrième circuit d'écoulement (124A) est formé par chacune des parties en saillie (121A) de chacune des premières plaques de circuit d'écoulement (11A), dans lequel
la chaleur sensible et la chaleur latente sont échangées entre un premier fluide (21A) et un deuxième fluide (21B), le premier fluide (21A) circulant à travers le premier circuit d'écoulement (123A) et le troisième circuit d'écoulement (124B), le deuxième fluide (21B) circulant à travers le deuxième circuit d'écoulement (123B) et le quatrième circuit d'écoulement (124A).

11. Dispositif de ventilation à échange de chaleur totale (200) comprenant :
l'élément d'échange de chaleur totale (10) selon la revendication 10 ;
un premier ventilateur (205) adapté pour permettre au premier fluide (21A) de s'écouler vers le premier circuit d'écoulement (123A) et le troisième circuit d'écoulement (124B) ; et
un deuxième ventilateur (206) adapté pour permettre au deuxième fluide (21B) de s'écouler vers le deuxième circuit d'écoulement (123B) et le quatrième circuit d'écoulement (124A).
